# EUROPEAN PATENT SPECIFICATION

(11) **EP 0 338 572 B1**
(45) Date of publication and mention of the grant of the patent: **07.07.1993**
(21) Application number: 89107172.2
(22) Date of filing: 20.04.1989
(51) Int. Cl.: H01J 49/04, G01N 30/72, G01N 30/88

(54) **Liquid chromatograph-direct coupled mass spectrometer**
Direkt mit einem Flüssigkeitschromatographen gekoppeltes Massenspektrometer
Spectromètre de masse couplé directement à un chromatographe à phase liquide

(30) Priority: 22.04.1988 JP 99366/88
(43) Date of publication of application: 25.10.1989
(73) Proprietor: HITACHI, LTD., Chiyoda-ku, Tokyo 100 (JP)
(72) Inventor: Kato, Yoshiaki, Mito-shi (JP); Mimura, Tadao, Katsuta-shi (JP)
(74) Representative: Strehl Schübel-Hopf Groening & Partner

(56) References cited:
- GB-A- 2 151 021

## Description

This invention relates to a liquid chromatograph-direct coupled mass spectrometer, which will be hereinafter referred to LC/MS, and more particularly to a liquid inlet port in the interface of LC/MS, which is suitable for improving the ionization efficiency without impairing the separation condition of liquid chromatography.

What is important in LC/MS is how to introduce a sample into the mass spectrometer without impairing the separation ability in the liquid chromatography. Thus, it is desirable that LC/MS can perform measurements without changing the measurement conditions of liquid chromatography. In an LC/MS using an ionization system based on ion-molecule reactions, however, some species of solutes in a mobile phase solvent of liquid chromatography cannot be ionized in some cases. Generally, ionization based on ion-molecule reaction under a pressure from the atmospheric pressure to a vacuum of about 133 Pa (1 Torr) includes several types of reaction. That is, proton transfer reaction and ion clustering reaction (addition reaction) take place as principal types of reaction in the ionization.

Mobile phase solvent molecules A are ionized by corona discharge and electron bombardments and formed into reagent gas ions, i.e. AH⁺ ions through further collisions with neutral molecules. Then, AH⁺ ions further collide with solute molecules B, whereby protons H⁺ are transferred from the AH⁺ ions to the solute molecules B to ionize the solute molecules B according to the following reaction equation.

AH⁺ + B ⇄ A + BH⁺

This proton transfer reaction has a high reaction rate and is one of the most important reactions taking part in the chemical ionization. In order to make the reaction proceed toward the right side in the foregoing reaction equation, the proton affinity of mobile phase solvent molecules A must be lower than that of solute molecules B, whereby the protons H⁺ can be smoothly transferred from A to B. In order to efficiently ionize B, a larger difference in the proton affinity is desirable between the mobile phase solvent molecules A and the solute molecules B. Proton affinity of solvents often used in a liquid chromatography is 727.1 kJ/mole with H₂O, 780.7 kJ/mole with methanol and 801.2 kJ/mole with acetonitrile. If the proton affinity of solute molecules B is more than 801.2 kJ/mole, ionization can proceed efficiently with any of these solvents, whereas in case of solute molecules B having a proton affinity of, for example, 795 kJ/mole, ionization can proceed with water or methanol as a mobile phase solvent, but not with acetonitrile. Thus, it is necessary in the chemical ionization to check the proton affinities of mobile phase solvent molecules A and the solute molecules B. In a liquid chromatography, however, the mobile phase solvent plays a role of separating solutes and thus free selection of mobile phase solvents to improve the ionization efficiency is very limited. That is, generally it is not possible to simply replace acetonitrile with water as a mobile phase solvent on the ground that the ionization cannot be carried out with acetonitrile. In order to solve this problem, it has been proposed to use an optimum mobile phase solvent playing a role of separating solute components in a liquid chromatography, add another solvent suitable for ionizing separated solute components and feed the resulting mixture to a nebulizing means [Anal Chem. 51 No. 14, 2324-2326 (1979); Biochemical and Environmental Mass Spectroscopy, Vol. 15, 179-182 (1988)].

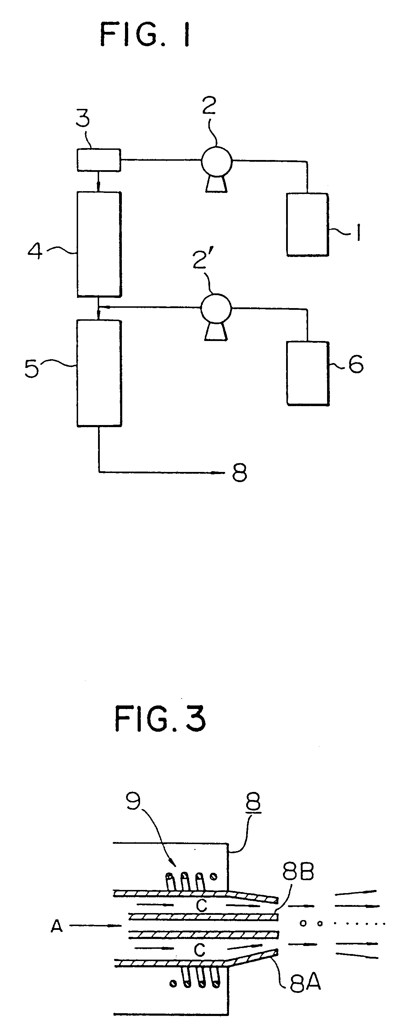

Fig. 1 shows a conventional system for nebulizing an eluate in an LC/MS, where a mobile phase solvent as an eluent, stored in an eluent storage tank 1 is fed to a separation column 4 through a sample injector 3 by driving a pump 2. A sample in a solution form is injected into the eluent at the sample injector 3 and separated into solute components through the separation column 4. When the eluent is not suitable for the ionization, the eluate from the separation column 4 is led to a mixing column 5 provided downstream of the separation column 4, where the eluate is mixed with an ionization solvent fed from an ionization solvent storage tank 6 by driving a pump 2′. The mixing column 5 is filled with glass beads, and the resulting-mixture is led to a nebulizing means. However, in the proposed art, the separated solute components in the eluate from the separation column 4 are diffused and remixed in the mixing column 5, forming the so called dead volumes. Thus, no satisfactory separation is expected. Furthermore, it is a premise of the proposed art that the mobile phase solvent and the ionization solvent are well mutually miscible and thus there is a limit to selection of an ionization solvent. For example, in case of hexane as a mobile phase solvent, water cannot be used as an ionization solvent.

Recently, a nebulizing means for the interface region of LC/MS using a thermospray system or an atmospheric pressure ionization (API) system has been proposed to attain direct and rapid vaporization of an eluate from the liquid chromatograph and successive ionization reactions [Anal Chem, 58 No. 14 1451A-1461A (1986); Anal Chem, 55, 2280-2284 (1983)]. However, the proposed nebulizing art still has such problems as use of auxiliary gases such as nebulizer gas and makeup gas in the vaporization of eluate, and consequent unstable ionization reactions and poor separation ability in the mass spectroscopy.

From GB-A-2 151 021 there is known a combined liquid chromatograph and mass spectrometer having an interface section in which the jet of the effluent of the exit nozzle of the chromatograph is enveloped in a gas flow. This gas can be a gas that is normally used for chemical ionization.

An object of the present invention is to provide a liquid chromatograph-direct coupled mass spectrometer having a high separation ability without any limit to selection of mobile phase solvent and ionization solvent and free from the disadvantages of the prior art.

The object of the present invention can be attained by a liquid chromatograph-direct coupled mass spectrometer, which comprises a liquid chromatograph section, a mass spectrometer section and an interface section coupling the liquid chromatograph section with the mass spectrometer section, the interface section being provided with a first nebulizing means for nebulizing an eluate of a hydrophobic solvent containing a sample in solution introduced from the liquid chromatograph section through a capillary continuously into a vacuum or atmospheric pressure region, the first nebulizing means being further provided with a second nebulizing means for nebulizing a hydrophilic solvent and with a heating means for heating the first and second nebulizing means.

In the present invention, the hydrophobic solvent (mobile phase solvent) containing a sample in solution and the hydrophilic solvent (ionizing solvent) are vaporized by the heating means and mixed together in a gaseous state, and thus the mutually immiscible solvents can be mixed. Furthermore, no such mixing column or no such auxiliary gases as nebulizer gas and makeup gas is required and thus a satisfactory separation ability can be obtained.

Fig. 1 is a schematic flow diagram showing an example of liquid chromatograph section in LC/MS according to the prior art.

Fig. 2 is a schematic flow diagram of LC/MC according to one embodiment of the present invention.

Fig. 3 is a detailed view of a nebulizer shown in Fig. 2.

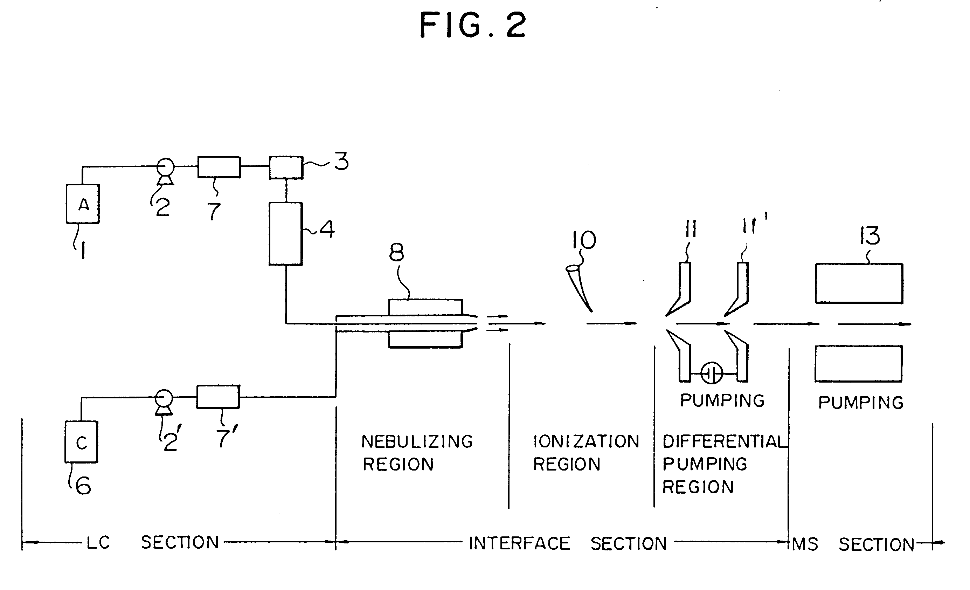

In Fig. 2, one embodiment of LC/MS according to the present invention is shown, which comprises a liquid chromatograph section, an interface section and a mass spectrometer section.

In Fig. 2, a hydrophobic solvent A (eluent) as a mobile phase solvent, stored in an eluent storage tank 1 is fed to a separation column 4 through a damper 7 and a sample injector 3 by driving a pump 2. A sample is injected into the eluent at the sample injector 3 and separated into solute components in the separation column 4 and an eluate containing the separated solute components from the separation column 4 is led to a nebulizer 8 through a capillary (inner diameter: 0.1 - 0.2 mm).

On the other hand, a hydrophilic solvent C as an ionization solvent, stored in an ionization solvent tank 6, is led to the nebulizer 8 through a damper 7′ by driving a pump 2′.

As shown in Fig. 3, the nebulizer 8 comprises a nozzle 8B, to which the eluate from the separation column 4 is led through the capillary, and a nozzle 8A having a larger diameter than that of the nozzle 8B, provided coaxially with the nozzle 8B, and the ionization solvent C from the ionization solvent tank 6 is led to the passage formed between the outer wall of the nozzle 8B and the inner wall of the nozzle 8A.

A heater 9 is provided at the outer periphery of the nozzle 8A to heat the nozzles 8A and 8B to a temperature of about 200° to about 600°C. The ionization solvent C from the ionization solvent tank 6 is thus heated and vaporized by heating with the heater 9 and injected into a vacuum or atmospheric pressure region from the passage between the inner wall of nozzle 8A and the outer wall of nozzle 8B. At the same time, the eluate from the separation column 4 is heated and nebulized and injected into the same region as above from the nozzle 8B. The nebulized liquid droplets of eluate collide with molecules of the heated and vaporized ionization solvent C and are made finer and ultimately vaporized. Thus, the eluate and the ionization solvent C can be completely mixed in a mutually gaseous state, whereby the hydrophobic solvent as a mobile phase solvent and the hydrophilic solvent as an ionization solvent, which are mutually immiscible in a liquid state, can be completely mixed.

Furthermore, the vaporized ionization solvent C in a gaseous state guide the nebulized eluate A into the desired direction and also acts to make the droplets of the eluate A finer, that is, plays a role of so called makeup gas. Thus, the swing of ions to be detected in the mass spectrometer section can be made smaller.

Then, the mixed gas of the vaporized eluate A and the ionization solvent C is ionized by a corona discharge needle 10 in an ionization region, passed through apertures at partition walls 11 and 11′ in a differential pumping region and mass analyzed in a mass spectrometer section with quadrupoles 13.

In the foregoing embodiment, the nozzles 8B and 8A in the nebulizer 8 are in a coaxial double pipe structure, but are not always limited thereto. That is, the nozzle 8B and nozzle 8A are provided in different axial directions from each other and their outlets are positioned close to each other to be focused to one point.

The foregoing nebulizer is applicable to a thermospray system or API system.

As is apparent from the foregoing description, the present LC/MC has a high separation ability without any limit to selection of hydrophobic solvents and hydrophilic solvents.

## Claims

1. A liquid chromatograph-direct coupled mass spectrometer, which comprises a liquid chromatograph section, a mass spectrometer section and an interface section coupling the liquid chromatograph section with the mass spectrometer section, the interface section being provided with a first nebulizing means (8B) for nebulizing an eluate of a hydrophobic solvent containing a sample in solution introduced from the liquid chromatograph section through a capillary continuously into a vacuum or atmospheric pressure region, the first nebulizing means (8B) being further provided with a second nebulizing means (8A) for nebulizing a hydrophilic solvent and with a heating means (9) for heating the first and second nebulizing means (8B, 8A).

2. The mass spectrometer of claim 1, wherein the first nebulizing means is a central capillary nozzle (8B) and the second nebulizing means is an outer shell nozzle (8A) coaxially surrounding the center capillary nozzle (8B), and the first and second nebulizing means (8B, 8A) constitute a double tube nozzle.

3. The mass spectrometer of claim 1, wherein the first nebulizing means is a capillary nozzle and the second nebulizing means is another capillary nozzle, and the two capillary nozzles are provided in different axial directions from each other and their outlets are positioned close to each other and focused to one point.

## Patentansprüche

1. Mit einem Flüssigkeitschromatograph direkt gekoppeltes Massenspektrometer, das einen Flüssigkeitschromatograph-Teil, einen Massenspektrometer-Teil und einen den Flüssigkeitschromatograph-Teil mit dem Massenspektrometer-Teil koppelnden Interface-Teil aufweist, wobei der Interface-Teil mit einer ersten Zerstäubungseinrichtung (8B) zum Zerstäuben eines von dem Flüssigkeitschromatograph-Teil durch eine Kapillare kontinuierlich in einen Vakuum- oder Atmosphärendruckbereich eingeleiteten Eluats eines hydrophoben Lösungsmittels versehen ist, das eine Probe in Lösung enthält, und wobei die erste Zerstäubungseinrichtung (8B) ferner mit einer zweiten Zerstäubungseinrichtung (8A) zum Zerstäuben eines hydrophilen Lösungsmittels sowie mit einer Heizeinrichtung (9) zum Beheizen der ersten und der zweiten Zerstäubungseinrichtung (8B, 8A) ausgerüstet ist.

2. Massenspektrometer nach Anspruch 1, wobei die erste Zerstäubungseinrichtung eine zentrische Kapillardüse (8B) und die zweite Zerstäubungseinrichtung eine die zentrische Kapillardüse (8B) koaxial umgebende Außenmanteldüse (8A) ist, und wobei die erste und die zweite Zerstäubungseinrichtung (8B, 8A) eine Doppelrohrdüse bilden.

3. Massenspektrometer nach Anspruch 1, wobei die erste Zerstäubungseinrichtung eine Kapillardüse und die zweite Zerstäubungseinrichtung eine weitere Kapillardüse ist, und wobei die beiden Kapillardüsen in unterschiedlichen Axialrichtungen zueinander verlaufen und mit ihren Auslässen nahe beieinander angeordnet und auf einen Punkt fokussiert sind.

## Revendications

1. Spectromètre de masse couplé directement à un chromatographe à phase liquide et qui comprend une section formant chromatographe à phase liquide, une section formant spectromètre de masse et une section d'interface couplant la section formant chromatographe à phase liquide à la section formant spectromètre de masse, la section d'interface étant équipée de premiers moyens de nébulisation (8B) pour nébuliser un éluat d'un solvant hydrophobe contenant un échantillon en solution introduit de façon continue à partir de la section formant chromatographe en phase liquide par l'intermédiaire d'un capillaire, dans une zone en dépression ou à la pression atmosphérique, les premiers moyens de nébulisation (8B) étant en outre équipés de seconds moyens de nébulisation (8A) servant à nébuliser un solvant hydrophile et de moyens de chauffage (9) pour chauffer les premiers et seconds moyens de nébulisation (8B,8A).

2. Spectromètre de masse selon la revendication 1, dans lequel les premiers moyens de nébulisation sont constitués par une buse capillaire centrale (8B) et les seconds moyens de nébulisation sont constitués par une buse (8A) entourant coaxialement la buse capillaire centrale (8B), et les premiers et seconds moyens de nébulisation (8B,8A) constituent une buse à deux tubes.

3. Spectromètre de masse selon la revendication 1, dans lequel les premiers moyens de nébulisation sont constitués par une buse capillaire et les seconds moyens de nébulisation sont constitués par une autre buse capillaire, et les deux buses capillaires sont dirigées dans des directions axiales différentes et leurs sorties sont disposées à proximité l'une de l'autre et sont focalisées en un point.
